(19) Europäisches Patentamt
European Patent Office
Office européen des brevets

(11) Veröffentlichungsnummer: **0 067 379**
**B1**

(12) # EUROPÄISCHE PATENTSCHRIFT

(45) Veröffentlichungstag der Patentschrift: **06.08.86**

(51) Int. Cl.4: **C 08 L 11/02** // (C08L11/02, C08F36:18)

(21) Anmeldenummer: **82104905.3**

(22) Anmeldetag: **04.06.82**

(54) **Verfahren zur Herstellung von Chloroprenpolymerisatmischungen.**

(30) Priorität: **16.06.81 DE 3123905**

(43) Veröffentlichungstag der Anmeldung: **22.12.82 Patentblatt 82/51**

(45) Bekanntmachung des Hinweises auf die Patenterteilung: **06.08.86 Patentblatt 86/32**

(84) Benannte Vertragsstaaten: **DE FR GB**

(56) Entgegenhaltungen:
**EP-A-0 028 732**
**EP-A-0 065 718**
**DE-B-1 720 107**
**DE-B-2 008 673**

(73) Patentinhaber: **BAYER AG, Konzernverwaltung RP Patentabteilung, D-5090 Leverkusen 1 Bayerwerk (DE)**

(72) Erfinder: **Musch, Rüdiger, Dr., Altenberger-Dom-Strasse 169, D-5060 Bergisch-Gladbach 2 (DE)**
Erfinder: **Pampus, Gottfried, Dr., Hahnenweg 2, D-5000 Köln 80 (DE)**
Erfinder: **Casper, Rudolf, Dr., St. Ingberter Strasse 3, D-5090 Leverkusen 1 (DE)**
Erfinder: **Müller, Peter, Dr., Ahornstrasse 2, D-5014 Kerpen (DE)**
Erfinder: **Göbel, Wilhelm, Dr., Max-Beckmann-Strasse 37, D-5090 Leverkusen 1 (DE)**

**EP 0 067 379 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur ausscheidungsfreien Polymerisation von Chloropren in wässriger Emulsion in Gegenwart definierter Emulgatormengen zu stabilen lagerfähigen Latices und zu Festkautschuken, deren Rohmaterial- und Vulkanisateigenschaften weitgehend unabhängig vom Latexalter sind.

Um den Anwendungsbereich von Polychloropren-Kautschuken zu erweitern, ist es nötig, die Verarbeitbarkeit zu verbessern. Man versteht darunter z.B. eine hohe Spritzleistung beim Extrudieren, eine geringe Spitzquellung und eine gute Masshaltigkeit der Extrudate.

Polychloropren-Kautschuke mit diesen Eigenschaften lassen sich herstellen, wenn man benzollöslichen Polychloroprenlatex (Sol-Polymer) und gelhaltigen Polychloroprenlatex (Gel-Polymer) mischt und zum Beispiel durch Gefrierkoagulation zum Festkautschuk aufarbeitet.

Solche Herstellungsverfahren sind in DE-AS 1 720 107 und GB-PS 1 158 970 beschrieben. Allerdings muss die günstige Verarbeitbarkeit durch eine Reihe von Nachteilen erkauft werden, z.B. durch geringe Lagerbeständigkeit des gelhaltigen Latex, niedrige Viskositätsstabilität des Rohkautschuks und Zugfestigkeiten der Vulkanisate, die erheblich schlechter sind als die der Sol-Polymeren allein.

In den DE-ASen 2 008 673 und 2 241 394 wurden verschiedene Massnahmen vorgeschlagen, um diese unerwünschte Verschlechterung der Eigenschaften zu vermeiden. Das ist nur teilweise gelungen, wobei nicht behoben werden konnte, dass die Viskositätsstabilität des Rohkautschuks und die Zugfestigkeit der Vulkanisate stark vom Latexalter, insbesondere der Gel-Komponente abhingen.

Es wurde nun gefunden, dass man lagerfähige vernetzte Polychloroprenlatices herstellen kann, die nach dem Mischen mit Sol-Polymeren und der Aufarbeitung Festkautschuke ergeben, deren Rohmaterial- und Vulkanisateigenschaften weitgehend unabhängig vom Alter des Polychloroprenlatex sind.

Gegenstand der Erfindung ist daher ein Verfahren zur Herstellung von Polychloropren-Mischungen aus Sol- und Gel-Polymer im Gewichtsverhältnis 1 zu 4 bis 9 zu 1, wobei man das Gel-Polymer durch radikalische Emulsionspolymerisation aus Chloropren und 1 bis 4 Mol-% (bezogen auf die Molmenge an Chloropren) eines Diesters aus einem zweiwertigen Alkohol und einer Acrylsäure in Gegenwart einer wasserlöslichen gesättigten oder ungesättigten Monocarbonsäure, in Gegenwart eines Kondensationsproduktes aus Naphthalinsulfonsäure und Formaldehyd und in Gegenwart von Kalilauge und das Sol-Polymer durch radikalische Emulsionspolymerisation aus Chloropren in Gegenwart einer wasserlöslichen gesättigten oder ungesättigten Monocarbonsäure, in Gegenwart eines Kondensationsproduktes aus Naphthalinsulfonsäure und Formaldehyd und in Gegenwart von Kalilauge dadurch herstellt, dass die Menge an wasserlöslicher gesättigter oder ungesättigter Monocarbonsäure bei der Herstellung des Gel-Polymeren 4,6 bis 6,0 Gew.-%, bezogen auf die Monomermenge, und bei der Herstellung des Sol-Polymeren 1,2 bis 3,4 Gew.-%, bezogen auf Monomermenge, beträgt, und die Polychloropren-Mischung maximal 3,8 Gew.-%, bezogen auf Gesamtmonomermenge, an wasserlöslicher gesättigter oder ungesättigter Monocarbonsäure aufweist.

Der Diester hat die allgemeine Formel

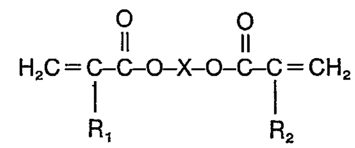

worin

$R^1$ und $R^2$ Wasserstoff oder $C_1$–$C_4$-Alkyl und

X $C_2$– bis $C_{10}$-Alkylen bedeuten.

Der Diester wird vorzugsweise in einer Menge von 2 bis 2,5 Mol-% eingesetzt. Bevorzugter Diester ist Ethylenglykoldimethacrylat.

Als wasserlösliche gesättigte oder ungesättigte Monocarbonsäure kommt insbesondere disproportionierte Abietinsäure, gegebenenfalls im Gemisch mit einer Fettsäure wie Ölsäure in Frage.

Die wasserlösliche gesättigte oder ungesättigte Monocarbonsäure dient als Emulgator; die Beschränkung auf 3,8 Gew.-% in der Polychloroprenmischung ist erforderlich, um eine unerwünscht hohe Walzenklebrigkeit zu vermeiden. Dieser Vorteil wird besonders dann deutlich, wenn der Emulgatorgehalt bei der Herstellung des Gel-Polymeren besonders hoch und bei der Herstellung des Sol-Polymeren entsprechend niedrig ist.

Die Polymerisation der beiden Komponenten kann diskontinuierlich oder kontinuierlich erfolgen, wobei die kontinuierliche Herstellungsweise bevorzugt ist. Die Polymerisation wird nach den üblichen Methoden durchgeführt, wie sie beispielsweise in den DE-ASen 1 720 107, 2 008 673 und 2 650 714 beschrieben ist. Die Aufarbeitung durch Gefrierkoagulation kann beispielsweise nach der in der DE-AS 1 051 606 beschriebenen Weise durchgeführt werden.

Die Menge an Kondensationsprodukt aus Naphthalinsulfonsäure und Formaldehyd beträgt vorzugsweise 0,3 bis 1,0 Gew.-% und die Menge an Kalilauge vorzugsweise 0,4 bis 1,0 Gew.-%, beide bezogen auf Gesamtmonomermenge.

50% der Kaliumionen können durch andere Alkaliionen ersetzt sein.

Vergleichsbeispiel 1 (Sol-Polymer)

In einem kühlbaren Reaktionsgefäss wurden die wässrige Phase W und die Monomerphase M vorgelegt und die Aktivatorphase A kontinuierlich eindosiert:

Monomerphase M:

| | |
|---|---|
| Chloropren | 100,0 g |
| n-Dodecylmercaptan | 0,22 g |

Wässrige Phase N:

| | |
|---|---|
| Entsalztes Wasser | 130,0 g |
| Kaliumsalz aus disproportionierter Abietinsäure | 3,5 g |
| Kaliumsalz des Kondensationsproduktes aus Naphthalinsulfonsäure und Formaldehyd | 0,7 g |
| Kaliumhydroxid | 0,9 g |

Aktivatorphase A:

| | |
|---|---|
| 3 gew.-%ige wässrige Formamidinsulfinsäurelösung (kontinuierlicher Zulauf) | 3,5 ml |

Bei einer Innentemperatur von 40 °C springt die Reaktion leicht an. Durch Aussenkühlung wird die freiwerdende Polymerisationswärme abgeführt und die Polymerisationstemperatur auf +45 °C gehalten. Bei einem Monomerumsatz von 66% wird die Reaktion durch Zugabe von Phenothiazin abgebrochen. Das restliche Monomere wird durch Wasserdampfdestillation aus dem Polymeren entfernt und der Polymerlatex bei 10 °C gelagert.

Vergleichsbeispiel 2 (Gel-Polymer)

Man verfährt wie in Beispiel 1 mit folgenden Mengen:

Monomerphase M:

| | |
|---|---|
| Chloropren | 96,0 g |
| Ethylenglykoldimethacrylat | 4,0 g |
| n-Dodecylmercaptan | 0,3 g |

Wässrige Phase W:

| | |
|---|---|
| Entsalztes Wasser | 130,0 g |
| Kaliumsalz der diproportionieren Abietinsäure | 2,2 g |
| Kaliumsalz des Kondensationsproduktes aus Naphthalinsulfonsäure und Formaldehyd | 0,7 g |
| Kaliumhydroxid | 0,4 g |

Aktivatorphase A:

| | |
|---|---|
| 3 gew.-%ige wässrige Formamidinsulfinsäurelösung (kontinuierlicher Zulauf) | 3,8 ml |

Bei einem Monomerumsatz von 80% wird die Reaktion durch Zugabe von Phenothiazin abgebrochen. Das restliche Monomere wird durch Wasserdampfdestillation aus dem Polymeren entfernt. Der Polymerlatex wird bei +10 °C gelagert.

Vergleichsbeispiele 3–7 (Änderung der Emulgatormenge)

Man stellt den Gel- und Solpolymerlatex, wie in Beispiel 1 und 2 beschrieben, in Gegenwart von unterschiedlichen Gehalten an Emulgator her, lagert ihn 10 Tage, vermischt Gel-Polymerlatex mit Sol-Polymerlatex im Verhältnis 40:60 und isoliert den Kautschuk.

| Beispiel Nr. | Gehalt an disproportionierter Abietinsäure in Gew.-%, bezogen auf Monomermenge | | |
|---|---|---|---|
| | Sol-Polymer | Gel-Polymer | Gesamtgehalt in der Mischung |
| 3 | 3,5 | 2,2 | 3,0 |
| 4 | 3,5 | 3,5 | 3,5 |
| 5 | 3,5 | 5,2 | 4,2 |
| 6 | 3,5 | 7,0 | 4,9 |
| 7 | 5,2 | 5,2 | 5,2 |

Beispiele 8 und 9

Man stellt Gel- und Solpolymerlatex wie in Beispielen 1 und 2 in Gegenwart unterschiedlicher Mengen an Emulgator her, lagert ihn 10 Tage, vermischt Gel-Polymerlatex mit Sol-Polymerlatex im Verhältnis 40:60 und isoliert den Kautschuk.

| Beispiel Nr. | Gehalt an disproportionierter Abietinsäure in Gew.-%, bezogen auf Monomermengen | | |
|---|---|---|---|
| | Sol-Polymer | Gel-Polymer | Mischung |
| 8 | 1,7 | 5,2 | 3,1 |
| 9 | 2,4 | 5,2 | 3,5 |

Bestimmung der Viskositätsstabilität

| Beispiel | ML–4 | ML–4 (3 Tg/70 °C) | ΔML |
|---|---|---|---|
| 3 | 53 | 79 | +26 |
| 4 | 51 | 73 | +22 |
| 5 | 54 | 58 | + 4 |
| 6 | 51 | 56 | + 5 |
| 7 | 53 | 57 | + 4 |
| 8* | 53 | 58 | + 5 |
| 9* | 52 | 56 | + 4 |

* erfindungsgemässes Beispiel

Nach dem Aufarbeiten zum Kautschuk bestimmt man die Viskosität der Proben nach Mooney (DIN 53523).

Zur Ermittlung der Viskositätsstabilität werden die Proben 3 Tage bei 70 °C gelagert und die Viskosität erneut bestimmt. Je stabiler die Produkte, umso geringer ist die Viskositätsdifferenz (ΔML) zwischen den beiden Messungen.

Bestimmung der Walzenklebrigkeit/Kalandertest

Die verminderte Walzenklebrigkeit der erfindungsgemässen Polymeren wird durch einen praxisnahen Text belegt. In einem Laborkneter werden innerhalb von 4 min. die nachstehenden Substanzen zunächst gemischt:

| | |
|---|---|
| Polymer | 100 g |
| Russ N-472 | 30 g |
| aromat. Mineralöl | 15 g |
| Phenyl-α-naphthylamin | 1 g |
| Stearinsäure | 0,5 g |
| Magnesiumoxid | 4 g |
| Zinkoxid | 5 g |

Nach einer Lagerungszeit von ca. 24. Stunden bei Raumtemperatur wird die Mischung auf einem Walzwerk auf ca. 50–55 °C vorgewärmt und dann auf einem Dreiwalzenlaborkalander (Walzenlänge 400 mm; Walzendurchmesser 200 mm) mit Friktionen von 1:1,31 zwischen der 1. und 2. Walze und 1:1 zwischen der 2. und 3. Walze zu einem Band von 0,5 mm Dicke ausgezogen.

Beurteilung der Klebrigkeit;

1 = Fell klebt nicht (wird von der schnelleren Walze nicht mitgenommen)
2 = Fell klebt etwas (wird von der schnelleren Walze etwas mitgenommen)
3 = Fell klebt (wird von der schnelleren Walze mitgenommen)
4 = Fell klebt stark (kann nur mit Mühe abgezogen werden)
5 = Fell klebt sehr stark (kann nicht mehr abgezogen werden)

| Einstellung | Temperatur der Walzen (°C) 1 | 2 | 3 |
|---|---|---|---|
| A | 35 | 40 | 50 |
| B | 40 | 45 | 55 |
| C | 43 | 52 | 60 |

| Polymer aus Beispiel | 8 | 3 | 9 | 4 | 5 | 6 | 7 |
|---|---|---|---|---|---|---|---|
| Einstellung | | | | | | | |
| A | 1–2 | 1–2 | 2 | 2 | 3–4 | 4 | 4 |
| B | 2 | 2 | 2 | 2 | 3–4 | 4 | 5 |
| C | 2–3 | 2–3 | 2–3 | 2–3 | 4 | 5 | 5 |

Aus den beiden Tabellen sieht man, dass bei gleichem Gesamtemulgatorgehalt in der Mischung (Beispiel 8 und 3/9 und 4) die Walzenklebrigkeit identisch ist, die Lagerstabilität sich aber durch die erfindungsgemässen Massnahmen deutlich verbessert. Ein zu hoher Gesamtemulgatorgehalt (Beispiele 5, 6, 7) beeinflusst die Lagerstabilität des Kautschuks zwar günstig, gleichzeitig wird jedoch die Walzenklebrigkeit erheblich schlechter.

Vulkanisatprüfung

Die Mischungsherstellung, Vulkanisation und Vulkanisatprüfung erfolgt unter Anlehnung an die ISO-Vorschrift 2475–1975 (E).

Vor der eigentlichen Mischungsherstellung werden 1000 g Polychloropren 6 min. lang mastiziert, wobei der Walzenspalt so eingestellt sein soll, dass sich ein Wulst mit einem Durchmesser von ca. 12 mm bildet. Nach der Mastikation werden 800 g Kautschuk abgenommen und mindestens 10, höchstens 120 min. lang gelagert.

| | |
|---|---|
| Walzwerk | 200 × 390 mm |
| Temperatur | 45–55 °C |
| Friktion | 1:1,4 (24:34 U/min.) |

Vor Beginn des Mischens wird das auf 30 °C eingestellte Walzwerk mittels Abfallkautschuk auf die angegebene Untergrenze der Betriebstemperatur erwärmt.

Prüfmischung

| Mischungsbestandteile | |
|---|---|
| Polychloropren | 100,00 g |
| Stearinsäure | 0,50 g |
| Magnesiumoxid | 4,00 g |
| Phenyl-α-naphthylamin | 2,00 g |
| Aktivruss | 30,00 g |
| Zinkoxid | 5,00 g |
| Ethylenthioharnstoff | 0,50 g |
| | 142,00 g |

Mischfolge und -zeiten entsprechen den genannten Angaben. Nach einer Mischzeit von 13 min. wird das Walzfell unter wechselseitigem Einschneiden (dreimal links und dreimal rechts) 1 min. bearbeitet und innerhalb weiterer 2 min. sechsmal durch einen 0,8 mm weiten Walzenspalt gezogen, so dass sich eine Gesamtmischzeit von 16 min. ergibt.

Die Mischung soll bis zur Vulkanisation mindestens 15 Stunden (über Nacht) gelagert werden.

| | |
|---|---|
| Temperatur | 130 °C |
| Zeit | 40 min. |

Die Prüfdaten werden nach den entsprechenden DIN-Vorschriften für Weichgummi ermittelt. Zur Bestimmung von Festigkeit, Bruchdehnung und Spannungswert nach DIN 53504 bzw. ISO 37-1976 wird der 4 mm dicke Normring $R_1$ verwendet.

Vulkanisateigenschaften

| Polymer aus Beispiel | 8 | 3 | 9 | 4 | 7 |
|---|---|---|---|---|---|
| Festigkeit (MPa) | 16,7 | 11,7 | 16,9 | 13,3 | 14,4 |

Die erfindungsgemäss hergestellten Polymeren (Beispiele 8, 9) haben gegenüber den Vergleichsbeispielen (Nr. 3, 4) bei gleichem Gehalt an Emulgator deutlich höhere Vulkanisatfestigkeiten.

**Patentansprüche**

1. Verfahren zur Herstellung von Polychloropren-Mischungen aus Sol- und Gelpolymeren im Gewichtsverhältnis 1:4 bis 9:1, wobei man das Gel-Polymer durch radikalische Emulsionspolymerisation aus Chloropren und 1 bis 4 Mol-% (bezogen auf die Molmenge an Chloropren) eines Diesters aus einem zweiwertigen Alkohol und einer Acrylsäure in Gegenwart einer wasserlöslichen gesättigten oder ungesättigten Monocarbonsäure, in Gegenwart eines Kondensationsproduktes aus Naphthalinsulfonsäure und Formaldehyd und in Gegenwart von Kalilauge und das Sol-Polymer durch radikalische Emulsionspolymerisation aus Chloropren in Gegenwart einer wasserlöslichen gesättigten oder ungesättigten Monocarbonsäure, in Gegenwart eines Kondensationsproduktes aus Naphthalinsulfonsäure und Formaldehyd und in Gegenwart von Kalilauge herstellt, dadurch gekennzeichnet, dass die Menge an wasserlöslicher gesättigter oder ungesättigter Monocarbonsäure bei der Herstellung des Gel-Polymeren 4,6 bis 6,0 Gew.-%, bezogen auf die Monomermenge, und bei der Herstellung des Sol-Polymeren 1,2 bis 3,4 Gew.-%, bezogen auf die Monomermenge, beträgt und die Polychloropren-Mischung maximal 3,8 Gew.-%, bezogen auf Gesamtmonomermenge, an wasserlöslicher gesättigter oder ungesättigter Monocarbonsäure aufweist.

2. Verfahren nach Anspruch 1, dadurch gekennzeichnet, dass der Diester die allgemeine Formel

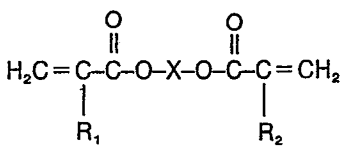

besitzt,
worin

$R_1$ und $R_2$ Wasserstoff oder $C_1$–$C_4$-Alkyl und
X $C_2$–$C_{10}$-Alkylen bedeuten.

3. Verfahren nach Anspruch 1, dadurch gekennzeichnet, dass als wasserlösliche gesättigte oder ungesättigte Monocarbonsäure disproportionierte Abietinsäure eingesetzt wird.

4. Verfahren nach Anspruch 1, dadurch gekennzeichnet, dass die Menge an Kondensationsprodukt aus Naphthalinsulfonsäure und Formaldehyd 0,3 bis 1,0 Gew.-% und die Menge an Kalilauge 0,4 bis 1,0 Gew.-%, beide bezogen auf Gesamtmonomermenge, beträgt.

5. Verfahren nach Anspruch 1, dadurch gekennzeichnet, dass bis zu 50% der Kaliumionen durch andere Alkaliionen ersetzt sein können.

**Claims**

1. Process for the production of polychloroprene mixtures of sol and gel polymers in a ratio by weight of 1:4 to 9:1, the gel polymer being produced by radical emulsion polymerisation from chloroprene and 1 to 4 mol % (based on the molar quantity of chloroprene) of a diester of a dihydric alcohol and an acrylic acid in the presence of a water-soluble saturated or unsaturated monocarboxylic acid, in the presence of a condensation product of naphthalene sulphonic acid and formaldehyde and in the presence of potassium hydroxide solution and the sol polymer being produced by radical emulsion polymerisation from chloroprene in the presence of a water-soluble saturated or unsaturated monocarboxylic acid, in the presence of a condensation product of naphthalene sulphonic acid and formaldehyde and in the presence of potassium hydroxide solution, characterised in that the quantity of water-soluble saturated or unsaturated monocarboxylic acid in the production of the gel polymer is 4.6 to 6.0% by weight, based on the quantity of monomer, and in the production of the sol polymer 1.2 to 3.4% by weight, based on the quantity of monomer, and the polychloroprene mixture contains at most 3.8% by weight, based on the total quantity of monomer, of water-soluble saturated or unsaturated monocarboxylic acid.

2. Process according to Claim 1, characterised in that the diester has the general formula

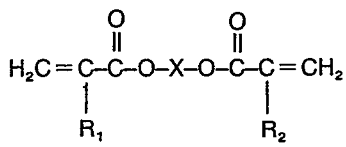

wherein

$R_1$ and $R_2$ denotes hydrogen or $C_1$–$C_4$-alkyl and
X denotes $C_2$–$C_{10}$-alkylene.

3. Process according to Claim 1, characterised in that disproportionated abietic acid is used as the water-soluble saturated or unsaturated monocarboxylic acid.

4. Process according to Claim 1, characterised in that the quantity of condensation product of naphthalene sulphonic acid and formaldehyde is 0.3 to 1.0% by weight and the quantity of potassium hydroxide solution is 0.4 to 1.0% by weight, both based on the total quantity of monomer.

5. Process according to Claim 1, characterised in that up to 50% of the potassium ions can be replaced by other alkali metal ions.

**Revendications**

1. Procédé de production de mélanges de polychloroprène formés de polymères colloïdaux et de polymères gélifiés dans un rapport en poids de 1:4 à 9:1, dans lequel on produit le polymère gélifié par polymérisation en émulsion radicalaire à partir de chloroprène et de 1 à 4 moles % (par rapport à la quantité molaire de chloroprène) d'un diester d'un alcool divalent et d'un acide acrylique en présence d'un acide monocarboxylique saturé ou insaturé soluble dans l'eau, en présence d'un produit de condensation d'acide naphthalènesulfonique et de formaldehyde et en présence de lessive de potasse, et on produit le polymère colloïdal par polymérisation en émulsion radicalaire à partir de chloroprène en présence d'un acide monocarboxylique saturé ou insaturé hydrosoluble, en présence d'un produit de condensation d'acide naphthalènesulfonique et de formaldéhyde et en présence de lessive de potasse, caractérisé en ce que la quantité d'acide monocarboxylique saturé ou insaturé hydrosoluble s'élève, lors de la production du polymère gélifié, à 4,6–6,0 % en poids par rapport à la quantité de monomère et, lors de la production du polymère colloïdal, à 1,2–3,4 % en poids par rapport à la quantité de monomère, et le mélange de polychloroprène présente au maximum 3,8 % en poids d'acide monocarboxylique saturé ou insaturé hydrosoluble, par rapport à la quantité totale de monomère.

2. Procédé suivant la revendication 1, caractérisé en ce que le diester répond à la formule générale

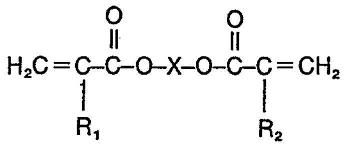

dans laquelle

$R_1$ et $R_2$ représentent de l'hydrogène ou un groupe alkyle en $C_1$ à $C_4$ et

X est un groupe alkylène en $C_2$ à $C_{10}$.

3. Procédé suivant la revendication 1, caractérisé en ce qu'on utilise comme acide monocarboxylique saturé ou insaturé hydrosoluble, de l'acide abiétique dismuté.

4. Procédé suivant la revendication 1, caractérisé en ce que la quantité de produit de condensation d'acide naphthalènesulfonique et de formaldéhyde s'élève à 0,3 – 1,0 % en poids et la quantité de lessive de potasse s'élève à 0,4 – 1,0 % en poids, dans les deux cas par rapport à la quantité totale de monomère.

5. Procédé suivant la revendication 1, caractérisé en ce que d'autres ions alcalins peuvent remplacer jusqu'à 50 % des ions potassium.